# EUROPÄISCHE PATENTSCHRIFT

(11) **EP 0 623 376 B1**
(45) Veröffentlichungstag und Bekanntmachung des Hinweises auf die Patenterteilung: **12.08.1998**
(21) Anmeldenummer: 94105520.4
(22) Anmeldetag: 09.04.1994
(51) Int. Cl.: B01D 46/42, G01N 15/08, F24F 3/16

(54) **Verwendung einer Vorrichtung zur Standzeit-Überwachung von Filtereinrichtungen in raumlufttechnischen Anlagen**
Use of a device for monitoring the run out time of filter installations in air conditioning systems
Utilisation d'un appareil de surveillance pour la durée d'emploi d'une installation de filtrage dans les équipements pour le traitement de l'air

(30) Priorität: 03.05.1993 DE 4314401; 20.08.1993 DE 9312523 U
(43) Veröffentlichungstag der Anmeldung: 09.11.1994
(73) Patentinhaber: HumanAir Patentverwertungsgesellschaft mbH, D-45128 Essen (DE)
(72) Erfinder: Weber, Johst, Dr., D-35435 Wettenberg (DE)
(74) Vertreter: Honke, Manfred, Dr.-Ing.

(56) Entgegenhaltungen:
- EP-A- 0 046 740
- DE-A- 2 449 112
- FR-A- 2 322 510
- GB-A- 1 387 408
- US-A- 4 515 007
- US-A- 4 619 136

## Beschreibung

Die Erfindung betrifft die Verwendung eine Vorrichtung wie sie im Oberbegriff von Anspruch 1 beschrieben ist für eine Standzeit-Überwachung von Filtereinrichtungen in raumlufttechnischen Anlagen, - mit Gebläse zur Förderung der Raumluft, zumindest einem Filter und einem Auslaßkanal mit Luftauslaß zum Auslassen der aufbereiteten Raumluft in den zugeordneten zu belüftenden Raum. - Bei den zu belüftenden Räumen handelt es sich insbesondere um für Menschen bestimmte Aufenthaltsräume aller Art, wie Büroräume, Wohnräume Räume in Krankenhäusern und dergleichen. Aufbereitung der Raumluft meint im Rahmen der Erfindung die Entfernung von Schadstoffen aus der Raumluft mit Hilfe der Filtereinrichtung. Der Begriff Schadstoffe umfaßt einerseits gesundheitsbedenkliche organische und anorganische chemische Substanzen und andererseits lebende Mikroorganismen wie beispielsweise Bakterien, Pilze und Viren. Der oder die Filter der Filtereinrichtung können verschiedenster Art sein. Es kann sich beispielsweise um Wandlerfilter und/oder Schwebstoffilter und/oder Sorptionsfilter handeln. Der Luftauslaß des Auslaßkanals kann beispielsweise als Auslaßdüse in der Decke eines zu belüftenden Raumes vorgesehen sein.

Aus der EP-A-0 431 648 ist eine Vorrichtung zur Aufbereitung der Raumluft mit Filtereinrichtung bekannt, bei der je ein Ozon-Sensor vor und hinter einem Wandlerfilter angeordnet ist. Mit dem ersten Ozon-Sensor vor dem Filter wird der Ozon-Gehalt der Raumluft vor einer oxidierenden Behandlung der Schadstoffe mit Ozon gemessen. Der zweite Ozon-Sensor mißt den Ozon-Gehalt der behandelten Luft hinter dem katalytisch wirkenden Wandlerfilter. Nach Maßgabe elektrischer Signale dieser beiden Ozon-Sensoren wird die Ozonzufuhr aus einem Ozonisator zur oxidierenden Behandlung der Schadstoffe in der Raumluft geregelt. Wenn der zweite Ozon-Sensor hinter dem Wandlerfilter eine zu hohe Ozon-Konzentration mißt, wird die Ozonzufuhr im Ozonisator herabgeregelt. Eine Überwachungseinrichtung für die Standzeit des Filters ist bei dieser Vorrichtung nicht vorgesehen. Nachteilhaft bei dieser Vorrichtung ist auch, daß nicht auszuschließen ist, daß eine unzulässig hohe und gesundheitsbedenkliche Ozon-Konzentration in den zu belüftenden Raum gelangt. Aus der EP-A-0 431 648 ist auch eine Laboratoriumsanordnung bekannt, mit der die Bedingungen in einer raumlufttechnischen Anlage simuliert werden. Der durch diese Anlage geführten Luft werden Schadstoffe in verschiedenen Konzentrationen und verschiedenen Mengen zugefügt, außerdem wird der Luft Ozon zur Oxidiation der Schadstoffe zugesetzt und die Luft anschließend durch verschiedene Filter- bzw. Katalysatoranordnungen geleitet. Die austretende Luft wird vorzugsweise mit Hilfe von Gaschromatographen analysiert. Diese Maßnahmen verfolgen insbesondere den Zweck, die Effektivität der Ozonbehandlung bzw. der eingesetzten Katalysatoren zu testen. Eine Standzeit-Überwachung von Filtern ist auch hier nicht vorgesehen.

Eine Vorrichtung, mit der in situ die Standzeit eines Filters überwacht werden kann, ist in der Schrift EP-A-0 046 740 beschrieben.

Bei Filtereinrichtungen, insbesondere in raumlufttechnischen Anlagen, sind exakte Vorhersagen der Lebensdauer der Filter äußerst schwierig, da die Standzeit eines solchen Filters schon bei normalen Schadstoffkonzentrationen um beispielsweise 2 bis 3 Monate differieren kann.

Der Erfindung liegt das technische Problem zugrunde, Filtereinrichtungen in raumlufttechnischen Anlagen zu überwachen, so daß funktionssicher ein Nachlassen der Filterkapazität signalisiert wird, wobei sich die verwendete Vorrichtung, durch einfache und wenig aufwendige Bauweise auszeichnet und problemlos auch in bereits bestehende raumlufttechnische Anlagen einbaubar ist.

Die Lösung dieses technischen Problems erfolgt gemäß den Merkmalen des Anspruchs 1 - Vor der Einlaßdüse können geeignete Mittel zum Verteilen bzw. Zerstäuben des Prüfmediums vorgesehen sein, wie beispielsweise ein Gitter oder ein Prallblech. Dies ist insbesondere dann zweckmäßig, wenn es sich bei dem Prüfmedium um eine flüssige Substanz handelt. Es versteht sich, daß die Sensoren selektiv auf die als Prüfmedium verwendete Substanz reagieren. Die für eine funktionssichere Testmessung gerade ausreichende Menge an Prüfmedium kann durch einfache Versuche ermittelt werden und hängt vor allem ab von der Art der Sensoren, Art der Filter und der Art des Prüfmediums.

Erfindungsgemäß wird die Durchführung von Testmessungen in Zeitabständen von mehreren Tagen, vorzugsweise in Zeitabständen von drei bis sieben Tagen vorzusehen. Dieser Zeitabstand reicht im allgemeinen für eine effektive Standzeit-Überwachung einer Filtereinrichtung aus. Außerdem wird bei diesen Zeitabständen eine verhältnismäßig geringe Menge Prüfmedium über einen längeren Zeitraum verbraucht, so daß einerseits der Tank für das Prüfmedium nicht laufend aufgefüllt werden muß und andererseits die in den zu belüftenden Raum eintretende Raumluft nicht unnötigerweise mit Prüfmedium, insbesondere mit eventuell schadstoffhaltigem Prüfmedium, beaufschlagt wird. Nach bevorzugter Ausführungsform der Erfindung können zusätzlich Bedienelemente für die manuelle Aktivierung einer Testmessung vorgesehen sein. Diese Bedienelemente sind zweckmäßigerweise in dem zu belüftenden Raum und/oder zumindest einem weiteren Raum und/oder in zumindest einer zentralen Überwachungsstelle angeordnet. Zweckmäßigerweise muß zur manuellen Aktivierung einer Testmessung zuvor ein Code eingegeben werden, damit sichergestellt ist, daß nur bestimmte Personen die Testmessung auslösen können.

Eine Annäherung der vor und hinter dem oder den Filtern gemessenen Konzentrationsmeßwerte und das infolgedessen über die Steuer- und/oder Regelvorrichtung aktivierte Signal weisen unmittelbar auf ein Nachlassen der Filterkapazität hin. Zweckmäßigerweise ist die Differenz zwischen den Konzentrationsmeßwerten, bei der ein Signal aktiviert wird, einstellbar bzw. vorgebbar. Es versteht sich, daß der vorgebbare Differenzbetrag nach Maßgabe der Art des oder der verwendeten Filter, der Schadstoffbelastung der Raumluft und der Art der Schadstoffe gewählt wird. Vorzugsweise sind nach Erreichen dieses Differenzbetrages und nach Aktivierung des optischen und/oder akustischen Signals weitere Testmessungen blockiert, um die in den zu belüftenden Raum gelangende Raumluft nicht unnötig mit Prüfmedium, insbesondere mit eventuell schadstoffhaltigem Prüfmedium, zu beaufschlagen.

Nach bevorzugter Ausführungsform der Erfindung ist der Signalgeber in dem zu belüftenden Raum, vorzugsweise im Bereich des Luftauslasses angeordnet. Es liegt dabei im Rahmen der Erfindung, daß der Signalgeber nur wenige Zentimeter neben dem Luftauslaß vorgesehen ist. Auf diese Weise ist der Signalgeber ohne besondere Kennzeichnung der entsprechenden Filtereinrichtung zuzuordnen. Nach bevorzugter Ausführungsform der Erfindung ist der Signalgeber als Leuchtdiode ausgeführt. Vorzugsweise ist die Leuchtdiode Bestandteil einer Kontrolltrafel, auf der zumindest eine weitere Leuchtdiode zur Anzeige einer ausreichenden Filterkapazität und/oder zur Anzeige des Zustandes der Tankfüllung und/oder zur Anzeige einer laufenden Testmessung angeordnet ist. Auf diese Weise erhält man eine kompakte Anzeigeeinrichtung, mit der alle wesentlichen Funktionen der erfindungsgemäßen Vorrichtung kontrollierbar sind. Die Kontrolltafel ist zweckmäßigerweise im Bereich des Luftauslasses, vorzugsweise nur wenige Zentimeter neben dem Luftauslaß angeordnet.

Nach der erfindungsgemäßen Verwendung ist eine funktionssichere und präzise Überwachung der Filterkapazität problemlos außerhalb der Filtereinrichtung bzw. der raumlufttechnischen Anlage, beispielsweise in dem zu belüftenden Raum möglich. Ein Nachlassen der Filterkapazität oder ein defekter Filter wird rechtzeitig erkannt, so daß ein Auswechseln des Filters erfolgen kann, bevor über einen längeren Zeitraum größere Schadstoffmengen in den zu belüftenden Raum gelagen. Ein aufwendiges Aus- und Einbauen der Filter für eine Prüfung in einer speziellen extremen Testvorrichtung ist nicht erforderlich. Auch das häufig übliche und willkürliche Auswechseln der Filter in bestimmten vorgegebenen Zeitabständen wird vermieden. Dabei werden häufig Filter mit noch ausreichender Filterkapazität ausgebaut und entsorgt. Vielmehr ist mit dem erfindungsgemäßen Vorgehen eine effektive Ausnutzung der Filterkapazität bis zum Filterwechsel möglich. Durch die erfindungsgemäß gewählten Zeitabstände zwischen den Testmessungen wird gewährleistet, daß nicht unnötig oft eventuell schadstoffhaltiges Prüfmedium in die Filtereinrichtung und gegebenenfalls in den zu belüftenden Raum gelangt. Da außerdem im Rahmen der Erfindung jeweils nur eine für eine funktionssichere Testmessung gerade ausreichende Menge an Prüfmedium eingegeben wird, zeichnet sich das erfindungsgemäße Vorgehen durch eine sehr geringe Schadstoffbelastung der Raumluft aus. Die erfindungsgemäß gewählten Zeitabstände der Testmessungen in Kombination mit den relativ einfachen Steuerungs- bzw. Regelmaßnahmen gewährleisten im übrigen einen verhältnismäßig wenig energieaufwendigen Dauerbetrieb der Überwachungsvorrichtung. Die Wartungsmaßnahmen für die verwendete Vorrichtung beschränken sich hauptsächlich auf ein gelegentliches Auffüllen des Tanks für das Prüfmedium. Insgesamt zeichnet sich die verwendete Vorrichtung durch eine einfache, wenig aufwendige und kompakte Bauweise aus. Die Herstellungskosten für die Vorrichtung sind verhältnismäßig gering, da nur wenige und vor allem relativ kostengünstige Bauteile benötigt werden. Außerdem ist die Vorrichtung auf sehr einfache Weise auch in schon vorhandenen Filtereinrichtungen bzw. raumlufttechnischen Anlagen installierbar.

Im folgenden wird die Erfindung anhand einer lediglich ein Ausführungsbeispiel darstellenden Zeichnung ausführlicher erläutert. Es zeigen in schematischer Darstellung
- **Fig. 1**: eine erfindungsgemäß verwendete Vorrichtung für die Standzeit-Überwachung von Filtereinrichtungen in raumlufttechnischen Anlagen,
- **Fig. 2**: einen Luftauslaß mit zugeordnetem Signalgeber an der Decke eines zu belüftenden Raumes,
- **Fig. 3**: eine Kontrolltafel mit Leuchtdioden als Signalgeber.

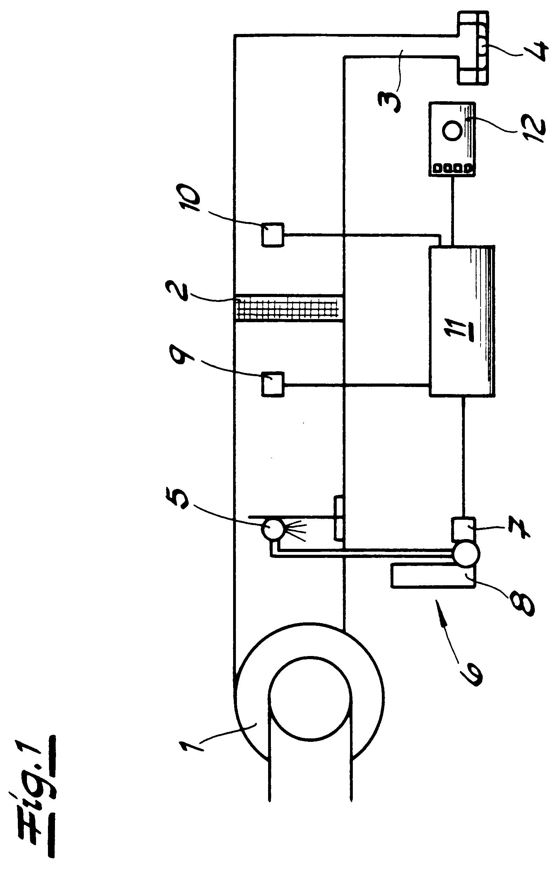

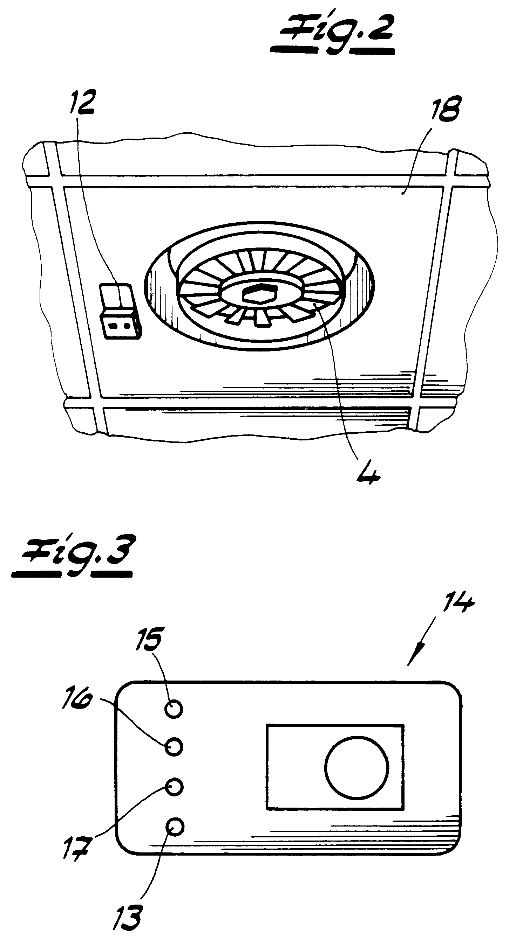

Die Fig. 1 zeigt eine Vorrichtung für eine Standzeit-Überwachung von Filtereinrichtungen in raumlufttechnischen Anlagen, mit Gebläse 1 zur Förderung der Raumluft, zumindest einem Filter 2 und einem Auslaßkanal 3 mit Luftauslaß 4 zum Auslassen der aufbereiteten Raumluft in den zugeordneten zu belüftenden Raum. Im Zuströmbereich vor dem Filter ist zumindest eine Einlaßdüse 5 für ein Prüfmedium vorgesehen, die an eine Eingabeeinrichtung 6 mit Pumpe 7 und Tank 8 für das Prüfmedium angeschlossen ist. Vorzugsweise und im Ausführungsbeispiel sind vor der Einlaßdüse 5 geeignete Mittel zum Zerstäuben des austretenden Prüfmediums vorgesehen, im Ausführungsbeispiel ein Prallblech. Das Prüfmedium ist vorzugsweise eine schadstoffarme Substanz. Zwischen der Einlaßdüse 5 und dem Filter 2 ist zumindest ein Sensor 9 zur Konzentrationsmessung des Prüfmediums angeordnet und dem Filter 2 ist zumindest ein weiterer Sensor 10 zur Konzentrationsmessung des Prüfmediums nachgeschaltet. Eine Steuer- und/oder Regelvorrichtung 11 ist zur automatischen Durchführung von Testmessungen in definierten Zeitabständen in der Größenordnung von Stunden oder Tagen, vorzugsweise sieben Tagen, vorgesehen. Zweckmäßigerweise sind nicht dargestellte Bedienelemente für die manuelle Aktivierung einer Testmessung vorgesehen. Die Steuer- und/oder Regelvorrichtung 11 ist mit der Eingabeeinrichtung 6 zur automatischen Eingabe von Prüfmedium in den definierten Zeitabständen verbunden, wobei die jeweils eingebbare Menge an Prüfmedium für eine funktionssichere Testmessung gerade ausreicht. Die Steuer- und/oder Regelvorrichtung 11 ist zur Verarbeitung elektrischer Signale der Sensoren 9, 10 eingerichtet und mit zumindest einem Signalgeber 12 verbunden, an dem bei Annäherung der vor und hinter dem Filter 2 gemessenen Konzentrationswerte ein optisches und/oder akustisches Signal aktivierbar ist. Der Signalgeber 12 ist außerhalb der raumlufttechnischen Anlage, im Ausführungsbeispiel in dem zu belüftenden Raum angeordnet (Fig. 2). Sowohl der Luftauslaß 4 als auch der Signalgeber 12 sind zweckmäßigerweise, wie in der Fig. 2 dargestellt, an der Decke 18 des zu belüftenden Raumes angeordnet. Im Ausführungsbeispiel ist der Signalgeber 12 nur wenige Zentimeter neben dem Luftauslaß 4 angeordnet (Fig. 2). Vorzugsweise und im Ausführungsbeispiel ist der Signalgeber 12 als Leuchtdiode 13 ausgeführt. Nach bevorzugter Ausführungsform und im Ausführungsbeispiel ist, wie in der Fig. 3 dargestellt, die Leuchtdiode 13 Bestandteil einer Kontrolltafel 14, auf der außerdem eine Leuchtdiode 15 zur Anzeige einer ausreichenden Filterkapazität, eine weitere Leuchtdiode 16 zur Anzeige einer laufenden Testmessung sowie eine Leuchtdiode 17 zur Anzeige des Zustandes der Tankfüllung vorgesehen ist.

## Patentansprüche

1. Verwendung einer Vorrichtung für eine Standzeit-Überwachung von Filtereinrichtungen, - mit Gebläse (1) zur Förderung der zu reinigenden Luft, zumindest einem Filter (2) und einem Auslaßkanal (3) mit Luftauslaß (4) zum Auslassen der aufbereiteten Luft,
bei der im Zuströmbereich vor dem Filter (2) zumindest eine Einlaßdüse (5) für ein Prüfmedium vorgesehen ist, die an eine Eingabeeinrichtung (6) mit Pumpe (7) und Tank (8) für das Prüfmedium angeschlossen ist,
bei der zwischen Einlaßdüse (5) und Filter (2) zumindest ein Sensor (9) zur Konzentrationsmessung des Prüfmediums angeordnet ist und wobei dem Filter (2) zumindest ein weiterer Sensor (10) zur Konzentrationsmessung des Prüfmediums nachgeschaltet ist,
bei der zumindest eine Steuer- und/oder Regelvorrichtung (11) zur Verarbeitung elektrischer Signale der Sensoren (9, 10) eingerichtet ist, **dadurch gekennzeichnet**, daß
die Vorrichtung in einer raumlufttechnischen Anlage eingesetzt wird und in der Vorrichtung die Raumluft eines zugeordneten zu belüftenden Raumes gefördert wird und die aufbereitete Raumluft aus dem Luftauslaß (4) in den zu belüftenden Raum ausgelassen wird,
daß mit Hilfe der Steuer- und/oder Regelvorrichtung (11) automatische Testmessungen in definierten Zeitabständen in der Größenordnung von mehreren Tagen durchgeführt werden,
daß ein schadstoffarmes oder schadstoffreies Prüfmedium automatisch in den definierten Zeitabständen mit der an die Steuer- und/oder Regelvorrichtung (11) angeschlossenen Eingabeeinrichtung (6) eingegeben wird, mit der Maßgabe, daß die jeweils eingebbare Menge dieses schadstoffarmen oder schadstoffreien Prüfmediums für eine funktionssichere Testmessung gerade ausreicht,
daß die Steuer- und/oder Regelvorrichtung (11) an zumindest einen Signalgeber (12) angeschlossen wird, an dem bei Annäherung der vor und hinter dem Filter (2) gemessenen Konzentrationswerte ein optisches und/oder akustisches Signal aktiviert wird und daß der Signalgeber (12) außerhalb der raumlufttechnischen Anlage in dem zu belüftenden Raum und/oder zumindest einem weiteren Raum und/oder in zumindest einer zentralen Überwachungsstelle angeordnet wird.

2. Verwendung nach Anspruch 1, dadurch gekennzeichnet, daß die Testmessungen in Zeitabständen von drei bis sieben Tagen durchgeführt werden.

3. Verwendung nach einem der Ansprüche 1 oder 2, dadurch gekennzeichnet, daß die Vorrichtung Bedienelemente für die manuelle Aktivierung einer Testmessung aufweist.

4. Verwendung nach einem der Ansprüche 1 bis 3, dadurch gekennzeichnet, daß der Signalgeber (12) in dem zu belüftenden Raum, vorzugsweise im Bereich des Luftauslasses (4) angeordnet wird.

5. Verwendung nach einem der Ansprüche 1 bis 4, dadurch gekennzeichnet, daß der Signalgeber (12) als Leuchtdiode (13, 15, 16, 17) ausgeführt wird.

6. Verwendung nach Anspruch 5, dadurch gekennzeichnet, daß die Leuchtdiode des Signalgebers (13) Bestandteil einer Kontrolltafel (14) ist, auf der zumindest eine weitere Leuchtdiode (15, 16, 17) zur Anzeige einer ausreichenden Filterkapazität und/oder zur Anzeige des Zustandes der Tankfüllung und/oder zur Anzeige einer laufenden Testmessung angeordnet wird.

## Claims

1. The use of an apparatus for monitoring the life of filter devices, - having a fan (1) for conveying the air to be purified, having at least one filter (2), and having an outlet channel (3) with an air outlet (4) for allowing the conditioned air to flow out,
wherein at least one inlet nozzle (5) for a test medium is provided in the inflow region in front of the filter (2), which inlet nozzle is connected to an input device (6) having a pump (7) and tank (8) for the test medium,
wherein at least one sensor (9) for measuring the concentration of the test medium is disposed between the inlet nozzle (5) and the filter (2), and wherein at least one further sensor (10) for measuring the concentration of the test medium is disposed downstream of the filter (2),
wherein at least one control- and/or regulating device (11) is installed for processing electrical signals from the sensors (9, 10), characterised in that
the apparatus is inserted in a ventilation and air-conditioning installation, and the ventilation air of an associated room to be ventilated is conveyed within the apparatus and the conditioned ventilation air is allowed to flow from the air outlet (4) into the room to be ventilated,
that automatic test measurements are made at defined time intervals of the order of magnitude of several days with the aid of the control- and/or regulating device (11),
that a low-contaminant or contaminant-free test medium is introduced automatically, at the defined time intervals, by the input device (6) connected to the control- and/or regulating device (11), with the proviso that the amount of this low-contaminant or contaminant-free test medium which can be introduced each time is just sufficient for an operationally reliable test measurement,
that the control- and/or regulating device (11) is connected to at least one signal transmitter (12) at which an optical and/or acoustic signal is activated when the concentration values measured in front of and behind the filter (2) approach each other, and that the signal transmitter (12) is disposed outside the ventilation and air-conditioning installation in the room to be ventilated and/or in at least one further room and/or in at least one central monitoring location.

2. A use according to claim 1, characterised in that the test measurements are made at time intervals of three to seven days.

3. A use according to either one of claims 1 or 2, characterised in that the apparatus comprises operating elements for the manual activation of a test measurement.

4. A use according to any one of claims 1 to 3, characterised in that the signal transmitter (12) is disposed in the room to be ventilated, preferably in the region of the air outlet (4).

5. A use according to any one of claims 1 to 4, characterised in that the signal transmitter (12) is constructed as a light-emitting diode (13, 15, 16, 17).

6. A use according to claim 5, characterised in that the light-emitting diode of the signal transmitter (13) is a component of a control panel (14), on which at least one further light-emitting diode (15, 16, 17) is disposed for displaying a satisfactory filter capacity and/or for displaying the state of the tank level and/or for displaying a test measurement which is proceeding.

## Revendications

1. Utilisation d'un dispositif pour la surveillance de la durée de vie d'installations de filtrage, comportant une ventilateur (1) pour le transport de l'air à épurer, au moins un filtre (2) et un canal de sortie (3) avec sortie d'air (4) pour l'évacuation de l'air traité,
dans lequel il est prévu dans la zone d'arrivée, devant le filtre (2), au moins une buse d'admission (5) pour un fluide d'essai, qui est raccordée à un dispositif de chargement (6) avec pompe (7) et réservoir (8) pour le fluide d'essai,
dans lequel il est disposé entre la buse d'admission (5) et le filtre (2), au moins un capteur (9) pour la mesure de la concentration du fluide d'essai et au moins un autre capteur (10) étant monté en aval du filtre (2) pour la mesure de la concentration du fluide d'essai,
dans lequel il est installé au moins un dispositif de commande et/ou de régulation (11) pour le traitement des signaux électriques des capteurs (9, 10), caractérisée en ce que
le dispositif est monté dans une installation de traitement d'air et dans le dispositif est transporté l'air ambiant d'un local associé à aérer et l'air ambiant traité est évacué par la sortie d'air (4) dans le local à aérer,
en ce qu'à l'aide du dispositif de commande et/ou de régulation (11), des mesures d'essai automatiques sont exécutées à intervalles de temps définis d'un ordre de grandeur de plusieurs jours,
en ce qu'un fluide d'essai à faible teneur ou à teneur nulle en substances nocives est introduit automatiquement pendant les intervalles de temps définis, au moyen du dispositif de chargement (6) raccordé au dispositif de commande et/ou de régulation (11), dans une mesure telle que la quantité à introduire chaque fois de ce fluide d'essai à faible teneur ou à teneur nulle en substances nocives suffise tout juste pour une mesure d'essai fiable,
en ce que le dispositif de commande et/ou de régulation (11) est raccordé à au moins un transmetteur de signaux (12), dans lequel un signal optique et/ou acoustique est activé à l'approche des valeurs de concentration mesurées devant et derrière le filtre (2), et en ce que le transmetteur de signaux (12) est disposé à l'extérieur de l'installation de traitement d'air, dans le local à aérer et/ou au moins dans un autre local et/ou dans au moins un poste de surveillance central.

2. Utilisation selon la revendication 1, caractérisée en ce que les mesures d'essai sont exécutées à des intervalles de temps de trois à sept jours.

3. Utilisation selon l'une des revendications 1 ou 2, caractérisée en ce que le dispositif comporte des éléments de commande pour l'activation manuelle d'une mesure d'essai.

4. Utilisation selon l'une des revendications 1 à 3, caractérisée en ce que le transmetteur de signaux (12) est disposé dans le local à aérer, de préférence dans la zone de la sortie d'air (4).

5. Utilisation selon l'une des revendications 1 à 4, caractérisée en ce que le transmetteur de signaux (12) est réalisé sous la forme d'une diode électroluminescente (13, 15, 16, 17).

6. Utilisation selon la revendication 5, caractérisée en ce que la diode électroluminescente (13) du transmetteur de signaux fait partie intégrante d'un panneau de contrôle (14), sur lequel est disposée au moins une autre diode électroluminescente (15, 16, 17) en vue de l'affichage d'une capacité de filtre suffisante et/ou de l'affichage de l'état du niveau du réservoir et/ou de l'affichage d'une mesure d'essai en cours.
